Europäisches Patentamt

European Patent Office

Office européen des brevets

(19)

(11) Publication number: **0 231 672 B1**

## EUROPEAN PATENT SPECIFICATION

(12)

(45) Date of publication of patent specification: **10.06.92**  (51) Int. Cl.5: **G11B 7/24**

(21) Application number: **86402530.9**

(22) Date of filing: **14.11.86**

(54) Optical memory device and process for fabricating same.

(30) Priority: **29.01.86 JP 18365/86**
**21.02.86 JP 36756/86**
**17.03.86 JP 56861/86**
**17.03.86 JP 56875/86**
**17.03.86 JP 56883/86**
**17.03.86 JP 56884/86**
**17.03.86 JP 56885/86**
**18.03.86 JP 58206/86**
**07.05.86 JP 104253/86**

(43) Date of publication of application:
**12.08.87 Bulletin 87/33**

(45) Publication of the grant of the patent:
**10.06.92 Bulletin 92/24**

(84) Designated Contracting States:
**DE FR GB NL**

(56) References cited:
**EP-A- 0 045 183**
**EP-A- 0 059 096**

**PATENT ABSTRACTS OF JAPAN, vol. 9, no.
105 (P-354)[1828], 9th May 1985; & JP-A-59
227 055**

(73) Proprietor: **FUJITSU LIMITED**
**1015, Kamikodanaka Nakahara-ku**
**Kawasaki-shi Kanagawa 211(JP)**

(72) Inventor: **Shibata, Itaru**
**1-5-13, Kamiyoga, Setagaya-ku**
**Tokyo 158(JP)**
Inventor: **Okada, Seiji**
**894, Shimomizo**
**Sagamihara-shi Kanagawa 229(JP)**
Inventor: **Miyazaki, Masahiro**
**6-5-203, Susukino 3-chome, Midori-ku**
**Yokohama-shi Kanagawa 227(JP)**
Inventor: **Naito, Kazunori**
**c/o Fujitsuatsugi-ryo, 2-3-10, Sakae-cho**
**Atsugi-shi Kanagawa 243(JP)**
Inventor: **Hamada, Mitsuru**
**3016-1-2122, Nagatsuta-cho, Midori-ku**
**Yokohama-shi Kanagawa 227(JP)**

(74) Representative: **Descourtieux, Philippe et al**
**CABINET BEAU de LOMENIE 55 rue**
**d'Amsterdam**
**F-75008 Paris(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

PATENT ABSTRACTS OF JAPAN, vol. 8, no. 154 (M-310)[1591], 18th July 1984; & JP-A-59 49 995

PATENT ABSTRACTS OF JAPAN, vol. 7, no. 202 (P-221)[1347], 7th September 1983; & JP-A-58 100 251

PATENT ABSTRACTS OF JAPAN, vol. 10, no. 30 (P-426)[2087], 5th February 1986; & JP-A-60 179 956

PATENT ABSTRACTS OF JAPAN, vol. 10, no. 84 (P-442)[2141], 3rd April 1986; & JP-A-60 219 655

**Description**

BACKGROUND OF THE INVENTION

1. Field of the Invention

The present invention relates to an optical memory device such as an optical memory disc and a process for fabricating same. More particularly, the present invention relates to a protecting film for protecting an optical recording medium film in an optical memory device, which protecting film does not deteriorate the optical recording medium film.

2. Description of the Related Art

A magnetooptical disc typically comprises a substrate, a lower protecting film on the substrate, a magnetooptical medium film on the lower protecting film, and an upper protecting film on the magnetooptical medium film. As a substrate, (1) a resin substrate made of, e.g., acryl, styrene, epoxy, or polycarbonate resin, or (2) a glass or resin substrate on which an ultraviolet (UV) cured resin film is formed, is used. In both cases, the substrate has tracking grooves on the surface thereof. A lower protecting film is inserted between the substrate and a magnetooptical medium film. This is because, if the magnetooptical medium film is formed in contact with the substrate, the magnetooptical medium is deteriorated by reaction with active components such as oxygen, moisture or unreacted monomers in the resin substrate or the UV cured resin film.

Recording and reading a magnetooptical memory disc are effected by making a laser beam incident on a disc from the substrate side and by receiving light reflecting from the substrate side of a disc. To this end, the lower protecting film must be transparent.

For the lower protecting film of a magnetooptical memory disc, oxide, sulfide, nitride, fluoride and carbide films have been proposed, including, for example, $SiO_2$, $Al_2O_3$, ZnS, $Si_3N_4$, AlN, $AlF_3$, $CaF_2$, $MgF_2$, TiC, SiC, etc.

These films are deposited onto a substrate having tracks on the surface thereof usually by evaporation or sputtering. During evaporation or sputtering, parts of a component such as oxygen, sulfur, nitrogen, and fluorine of the above compounds, however, become free components and are contained in a deposited film, i.e., a lower protecting film. Further, a deposited film may contain a component such as oxygen from the atmosphere during deposition. These free components are active and easily react with a component of a magnetooptical medium film. Typically, a magnetooptical medium is composed of rare earth and transition metals and the rare earth metal very easily reacts with an active components such as the above free component. Thus, a magnetooptical medium is likely to deteriorate even if a protecting film is provided below the magnetooptical medium film. Upon aging, for example, the coercive force of a magnetooptical medium is reduced.

Deterioration of an optical recording medium film is common in an optical memory device including a magnetooptical memory medium device, a phase transition type optical memory device, etc.

As a protecting film for protecting an optical memory medium, many dielectric materials such as oxides, sulfides, nitrides, fluorides and carbides have been proposed in such literature as; S. Uchiyama "Magnetooptical Recording Media" The Materials for the 42nd Society for Study, Japan Applied Magnetic Society, pp 1 - 9, Sep. 11, 1985; T. Deguchi et al, "Digital Magnetooptic Disc Drive", Applied Optics, Vol. 23, No. 22, pp 3972 - 3978, Nov. 15, 1984; and the like, and the inventors discovered that a protecting film formed by codepositing a metal and a compound has not been proposed.

A film composed of a metal compound and a metal has been proposed to improve the sensitivity of a heat mode optical recording medium, i.e., a medium in which recording is effected by mechanically deforming a portion of the medium with heat from a laser beam. For example, Japanese Unexamined Patent Publication (Kokai) Nos. 60-243842, 57-36445, and 57-141033. These publications, however, do not disclose a protecting film for protecting an optical recording medium film. Such a protecting film is disclosed in Japanese Unexamined Patent Publication N° 60-219 655; however, as this protecting film is formed of a rare earth metal, it absorbs the light, with the result that the efficiency of the magneto-optical recording device is lowered.

SUMMARY OF THE INVENTION

The object of the invention is to eliminate the above-mentioned problems in the prior art and to provide an optical memory device which is not deteriorated by reaction between an optical recording medium film and a protecting film.

The above and other objects, features and advantages of the present invention are attained by an optical memory device as specified in claim 1.

By codepositing a first (rare earth) metal and a compound of a second metal to form a protecting film, a free component, which is active, released from the compound during deposition will react with said first metal to form a metal compound and become stable and unactive.

The compound which may be used in forming a codeposited protecting film according to the present invention is typically a transparent dielectric material and includes oxides such as $SiO_2$ , $Al_2O_3$ , CaO, $La_2O_3$ , MgO, $Sb_2O_3$ , SiO, as well as $SnO_2$ and $ZrO_2$; sulfides such as ZnS, CdS, PbS, $Sb_2S_2$ ; fluorides such as $AlF_3$ , $CaF_2$ , CeF, $LaF_3$ , $MgF_2$ , $NaAlF_6$ , NaF, LiF, $NdF_3$ , $PbF_2$ , $ThF_4$ ; nitrides such as AlN, $Si_3N_4$ , TiN; and carbides such as TiC, SiC, $Cr_3C_2$ , $Mo_2C$, WC.

Oxides are easily available and, therefore, are commercially advantageous.

Some oxides such as $SnO_2$ and $ZrO_2$ and sulfides have a relatively high refraction index and, therefore, have an advantage of allowing an increase in the apparent Kerr effect of a magnetooptical memory disc.

Fluorides have an advantage, as a protecting film, in that they have a relatively low refraction index, close to that of a glass or plastic substrate, which allows rough control of the thickness of the film in an optical memory device.

When a carbide alone is deposited, free carbon may be produced and contained in a deposited projecting film, but such free carbon generally is not so reactive with a magnetooptical medium. However, free oxygen is often entrained into a deposited film from an atmosphere such as air during deposition which free oxygen is very reactive with a magnetooptical medium, with a corresponding deterioration of the magnetooptical medium.

A mixture of compounds is not excluded from the compound of the second metal to be codeposited.

The first metal to be codeposited with a compound of a second metal should be a metal which will react with free component released from the component, such as, free oxygen, sulfur, fluorine and nitrogen, and preferably has a lower free energy of formation of a compound with the free component than that of the second metal. The lower free energy will facilitate formation of a compound from the free component and the first metal. In this context, rare earth metals, i.e., La, Ce, Pr, Nd, Pm, Sm, Eu, Gd, Tb, Dy, Ho, Er, Tm, Yb and Lu, as well as Y and Sc, are most preferable as the first metal. More than one metals may be codeposited with the compound in the present invention.

Regarding the amount of the first metal, even a low amount is effective, because such a low amount of the first metal will still react with the free components released from the compound of the second metal, such as oxygen, sulfur, fluorine or nitrogen, to reduce the activity of the free component. On the other hand, it is not particularly disadvantageous if the amount of the first metal is greater than needed to remove all possible active free components. However, an excess of the first metal decreases the transparency of the codeposited film. Therefore, the amount of excess first metal should be less than the amount which causes a 10% decrease of the optical transparency of the codeposited film, based on the optical transparency of a film formed by depositing the compound of the second metal alone. The effective amounts of different first metals for different compounds should be determined after considering various factors such as the kind of the first metal and the compound of a second metal, as well as the conditions of deposition, and thus should be determined experimentally. Table 1 shows examples of general and preferable (in parentheses) amounts of the first metal percent by atom number in cases of different compounds, first metals, and deposition methods. Generally speaking, more than 6%, more preferably 10% of the first metal based of the total amount of the first metal and the compound of the second metal is preferable to obtain a desired improvement in reliability of a memory device. At least 6 atm% of the first metal is necessary to react with active components, particularly completely-free components and more than 10 atm% would be necessary to react with all active components including not only completely- but also incompletely-free components.

## Table 1

| Compound | First Metal | Generally [atm%] | Preferably [atm%] |
|---|---|---|---|
| Oxide | RE | 17-60 | 20-60 |
| | Si | 17-36 | 20-30 |
| Sulfide | RE | 1-60 | 10-60 |
| | Si | 17-36 | 20-30 |
| Fluoride | RE | 17-60 | 20-60 |
| | Si | 17-36 | 20-30 |
| Nitride | RE | 1-60 | 10-60 |
| | Si | 17-36 | 20-30 |
| Carbide | RE | 1-60 | 10-60 |
| | Si | 17-36 | 20-30 |

(Note) RE = rare earth metal

The thickness of a codeposited protecting film is usuallY some hundreds of nano meters.

In an optical memory device according to the present invention, a protecting film formed by codepositing a first metal and a compound of a second metal is used as at least one of the first and second protecting films, i.e., lower and upper protecting films. Typically, the codeposited protecting film is used as the first or lower protecting film since a laser beam is typically incident on the recording medium film from the lower or substrate side. However, if a laser beam is incident on the recording medium film from the upper or opposite-to-the-substrate side, the codeposited protecting film should be used in the second or upper protecting film of the optical memory device. Further, both the first and second protecting films may be a codeposited protecting film, although this is not necessary except when the optical memory device is a light transmission type.

The present invention is particularly directed to providing a suitable protecting film for a magnetooptical recording medium of rare earth-transition metals but is not limited thereto. The optical recording medium may be other magnetooptical recording media such as garnet, or other type media, for example, an optical recording medium using phase transition between amorphous and crystalline phases or between different crystalline phases. Generally, the present invention is particularly applicable to an optical memory device which does not involve mechanical deformation, including perforation, of a medium.

The present invention also relates to a process for fabricating the optical memory device as described above, which is specified in claim 9.

Codepositing a first metal and a compound of a second metal, i.e., simultaneous deposition of a first metal and a compound of a second metal may be carried out, for example, by coevaporation or cosputtering. For coevaporation, a first metal and a compound of a second metal are charged in separate crucibles or boats, which are heated with heaters or electron beams. The deposition ratio between the first metal and the second metal compound can be controlled by varying the amount of power used for each evaporation. Alternatively, one source of a mixture of a first metal and a compound of a second metal may be used.

For cosputtering, a target of a second metal compound with a chip of a first metal thereon may be used. Alternatively, two targets of a second metal compound and a first metal may be used. The ratio of deposition between a first metal and a second metal compound can be controlled by varying the ratio of the areas for each target or chip. Further, a mixture of a first metal and a compound of a second metal may be used as a target for cosputtering.

Other codepositing methods, for example, ion plating, may be used.

In according to a preferable embodiment of the present invention, the codeposited film, i.e., the protecting film, particularly the first or lower protecting film, is heat treated after deposition. This heat treatment facilitates reaction between a first metal and a free component decomposed from a second metal compound in the deposited film, thus contributing to a greater stabilization of an optical memory device. Even at a low temperature, this heat treatment is effective, contrary to the usual stabilization treatment of an oxide. A higher temperature is preferable for accelerating the treatment, unless it will damaged a plastic substrate or a UV cured resin film for guide grooves. Usually, at least 150°C is safe, even in the case of a UV cured resin film formed on a glass substrate. However, even if a substrate can endure a higher temperature, too high a temperature may cause a reduction of adherence between the protecting film and the substrate, and thus a temperature lower than about 200°C is preferable. The time period for the heat treatment is usually an hour or so, but less than an hour is still effective. More than an hour, however, is not particularly effective, for economical reasons.

An optical recording medium film and a protecting film other than the codeposited protecting film may be formed conventionally. Such a not-codeposited protecting film, typically a second or upper protecting film, can be opaque and thus made of a metal, etc. As mentioned before, both protecting films, however, can be made of a codeposited film of a first metal and a second metal compound.

BRIEF DESCRIPTION OF THE DRAWINGS

Figure 1 is a schematical sectional view of a coevaporation device;

Fig. 2 is a partial sectional side view of an optical memory device;

Fig. 3 shows changes of the coercive force of magnetooptical discs having a $Tb$-$SiO_2$ protecting film with the time lapsed in Example 1;

Fig. 4 is an Auger profile of a magnetooptical disc with a $Tb$-$SiO_2$ protecting film according to the present invention in Example 1;

Fig. 5 is an Auger profile of a magnetooptical disc with an $SiO_2$ protecting film of the prior art in Example 1;

Fig. 6 shows changes of the light transmission of pit-type optical discs having a $Tb$-$SiO_2$ protecting film with the time lapsed in Example 2;

Fig. 7 shows changes of the coercive force of magnetooptical discs having a heated $Tb$-$SiO_2$ protecting film with the time lapsed in Example 3;

Fig. 8 shows changes of the C/N ratio of magnetooptical discs having a heated $Tb$-$SiO_2$ protecting film with the time lapsed in Example 3;

Fig. 9 shows changes of the coercive force of magnetooptical discs having a heated $SiO_2$-$Tb$ protecting film with the time lapsed in Example 5;

Fig. 10 shows changes of the C/N ratio of magnetooptical discs having a heated $SiO_2$-$Tb$ protecting film with the time lapsed in Example 5;

Fig. 11 shows changes of the coercive force of magnetooptical discs having a $Tb$-$ZnS$ protecting film with the time lapsed in Example 8;

Fig. 12 shows changes of the C/N ratio of magnetooptical discs having a $Tb$-$ZnS$ protecting film with the time lapsed in Example 9;

Fig. 13 is a schematical sectional view of a cosputtering device;

Fig. 14 shows changes of the coercive force of a magnetooptical disc having a $Dy$-$ZnS$ protecting film with the time lapsed in Example 12;

Fig. 15 shows changed of the coercive force of magnetooptical discs having a $Tb$-$MgF_2$ protecting film with the time lapsed in Example 14;

Fig. 16 shows changes of the C/N ratio of magnetooptical discs having a $Tb$-$MgF_2$ protecting film with the time lapsed;

Fig. 17 shows changes of the coercive force of magnetooptical discs having a heated Tb-MgF$_2$ protecting film with the time lapsed in Example 18;

Fig. 18 shows changes of the C/N ratio of magnetooptical discs having a Tb-MgF$_2$ protecting film with the time lapsed in Example 18;

Fig. 19 shows changes of the coercive force of magnetooptical discs having a Tb-MgF$_2$ protecting film with the time lapsed in Example 20;

Fig. 20 shows changes of the C/N ratio of magnetooptical discs having a Tb-MgF$_2$ protecting film in Example 20;

Fig. 21 shows changes of the coercive force of magnetooptical discs having a Tb-Si$_3$N$_4$ protecting film with the time lapsed in Example 23;

Fig. 22 shows changes of the C/N ratio of magnetooptical discs having a Tb-Si$_3$N$_4$ protecting film with the time lapsed in Example 24;

Fig. 23 shows changes of the coercive force of magnetooptical discs having a Dy-TiC protecting film with the time lapsed in Example 27; and

Fig. 24 shows change of the coercive force of a magnetooptical disc having a Tb-SnO$_2$ protecting film with the time lapsed in Example 30.


DESCRIPTION OF THE PREFERRED EMBODIMENTS

The present invention is further described below with reference to examples and drawings.


Example 1

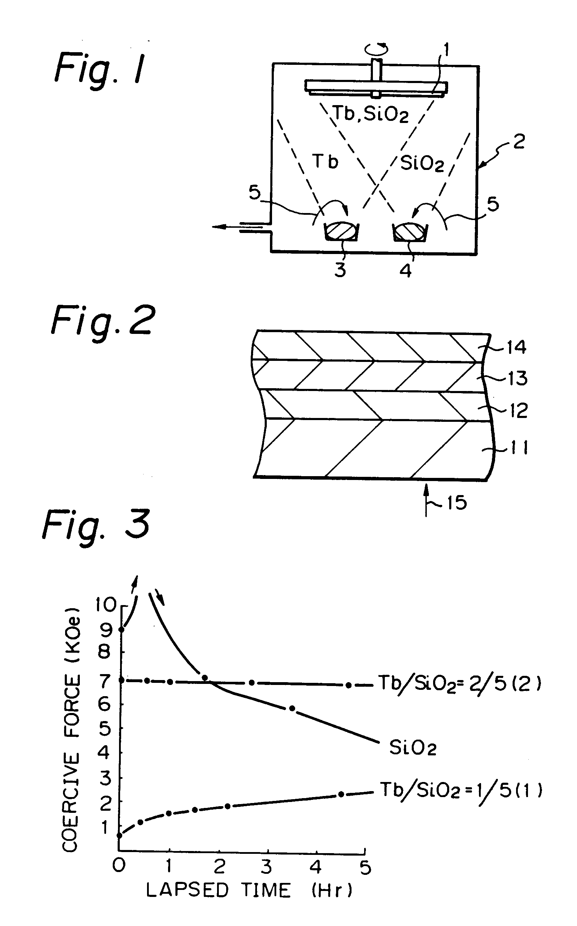

As the transparent substrate to be used for optical disc, there are, for example, acrylic resin (PMMA), epoxy resin, a polycarbonate resin and glass having optical guide grooves. Guide grooves for tracking may be formed directly by etching of the substrate surface, but it is frequently practiced to form guide grooves for tracking by use of a UV-ray curable resin. Referring to Fig. 1, anyway, a substrate I having a guide groove for tracking formed thereon is set within a vacuum evaporation device and, after evacuation internally of the evaporation chamber 2 to $5 \times 10^{-5}$ Pa or lower, a protecting film was formed while rotating the substrate. In this example, Tb as the metal and SiO$_2$ as the metal oxide were respectively charged in two hearths 3, 4 and coevaporation was effected by heating these with electron beam 5. The deposition rates were selected as (1) Tb 2 Å/s, SiO$_2$ 5 Å/s and (2) Tb 1 Å/s, SiO$_2$ 5 Å/s and evaporation was effected until the film thickness became 1000 Å. The vacuum degree during evaporation was $7\text{-}8 \times 10^{-5}$ Pa.

Referring to Fig. 2, after formation of a lower protecting film 12 on the substrate 11, TbFeCo film 13 which is magnetooptical recording medium was formed as the recording medium film. Film formation was carried out according to coevaporation of Tb and FeCo and the respective deposition rates were controlled so as to give a desired film composition. The film thickness was made 1000 Å. Next, an upper protecting film 14 was formed. Since the upper protecting film 14 is not on the side where laser beam 15 enters during usage of the optical disc, it is not required to be transparent to laser beam and Si film was evaporated to 1000 Å in this example.

For comparative purpose, a magnetooptical disc was prepared according to the prior art method in which no Tb was simultaneously deposited for the lower protecting film.

The thus prepared magnetooptical disc was maintained in air at 150° C for examination of the change in coercive force of the magnetooptical recording film 13. Deterioration of the magnetooptical medium by oxidation and corrosion appears as the change in coercive force, Kerr rotational angle and reflectance. Among them, change in coercive force corresponds to change in composition of the magnetooptical medium (recording film) and it will be changed greatly when a readily oxidizable rare earth element is oxidized to an oxide during oxidation and corrosion. Accordingly, durability of a magnetooptical disc and the effect of the protecting film can be evaluated by examination of the change with lapse of time in coercive force.

The results are shown in Fig. 3 (wherein Tb/SiO$_2$ indicates the deposition ratio of Tb and SiO$_2$). When no Tb is contained in the lower protecting film, coercive force is markedly changed and the magnetooptical recording medium is deteriorated. In contrast, when Tb is contained in the lower protecting film, it can be recognized that change in coercive force is small. This shows that deterioration of TbFeCo in the recording film is prevented by codeposition of Tb with SiO$_2$ for the protecting film.

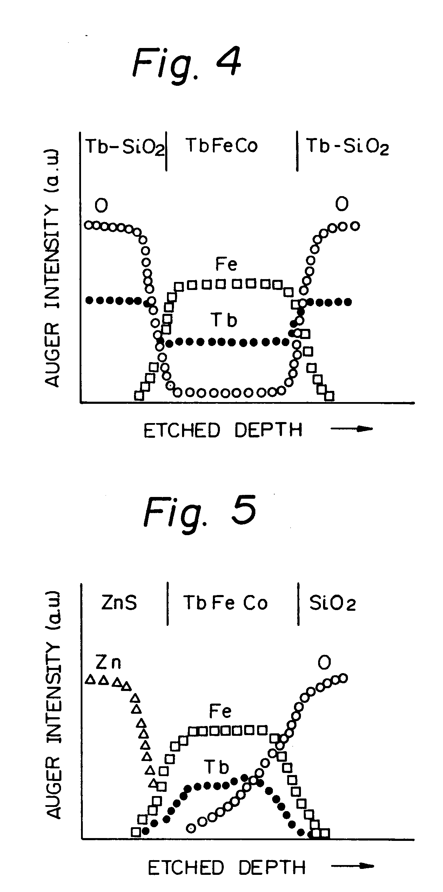

To make it clear that a codeposited film of a rare earth metal and an oxide prevents oxidation of a magnetooptical recording medium film of rare earth and transition metals, an Auger profile of an optical memory device comprising the above films is made as the films are gradually etched by sputtering. One sample was made from a lower protecting film of coevaporated Tb and $SiO_2$ , a magnetooptical recording medium film of TbFeCo, and an upper protecting film of codeposited Tb and $SiO_2$. Another sample for comparison purposes, was made from a lower protecting film of $SiO_2$ , a magnetooptical recording medium film of TbFeCo, and an upper protecting film of ZnS. Figures 4 and 5 show Auger profiles of these samples, respectively. From Fig. 5, it is seen that TbFeCo involves a large amount of oxygen in the case of $SiO_2$ lower film. Oxygen seems to have invaded the TbFeCo film from $SiO_2$ side, not from atmospheric side. The increase of Tb near boundary between the TbFeCo and $SiO_2$ films is considered that Tb in the TbFeCo film diffused for invading oxygen. On the other hand, in Fig. 5, i.e., in the case of Tb-$SiO_2$ lower film, Auger peak of oxygen in the TbFeCo film is much smaller than in the case of $SiO_2$ lower film. No increase of Tb near boundary between the TbFeCo and Tb-$SiO_2$ films appears in Fig. 5. From these results we can guess Tb in Tb-$SiO_2$ films traps active oxygen in this film, and inhibit oxidizing Tb in TbFeCo preferentially.

### Example 2

In Example 1, as the recording medium for optical disc, a description was given of a TbFeCo film which is generally employed as the magnetooptical disc medium. However, the protecting film of the present invention is also effective for other optical disc recording films.

The substrate and film formation of the lower protecting film are similar to those described in Example 1. But, PMMA was used as the substrate. Next, Te was evaporated as the recording film. Deposition of Te was conducted under the conditions of a vacuum degree of $5 \times 10^{-5}$ Pa and a deposition rate of 5 Å/s, until the film thickness became 200 Å. Next, film formation of an upper protecting film was carried out. Also in this case, the upper protecting film is not required to be transparent to a laser beam, and here a film of copper phthalocyanine was formed to a thickness of 200 Å.

Also, in this case, for comparative purposes, an optical disc having a lower protecting film consisting only of $SiO_2$ was prepared.

The optical disc with the use of Te as the recording film, although Te itself is not so reactive to oxygen compared with TbFeCo as described in Example 1, can be oxidized with oxygen and water in the air to become transparent. Accordingly, for confirmation of the effect of the protecting film according to the present invention, the product having the lower protecting film and the recording film formed on the PMMA substrate as described above (the upper protecting film was formed of copper phthalocyanine) was left to stand in an environment of 60°C and 90% RH and change with the lapse of time in light transmittance was examined.

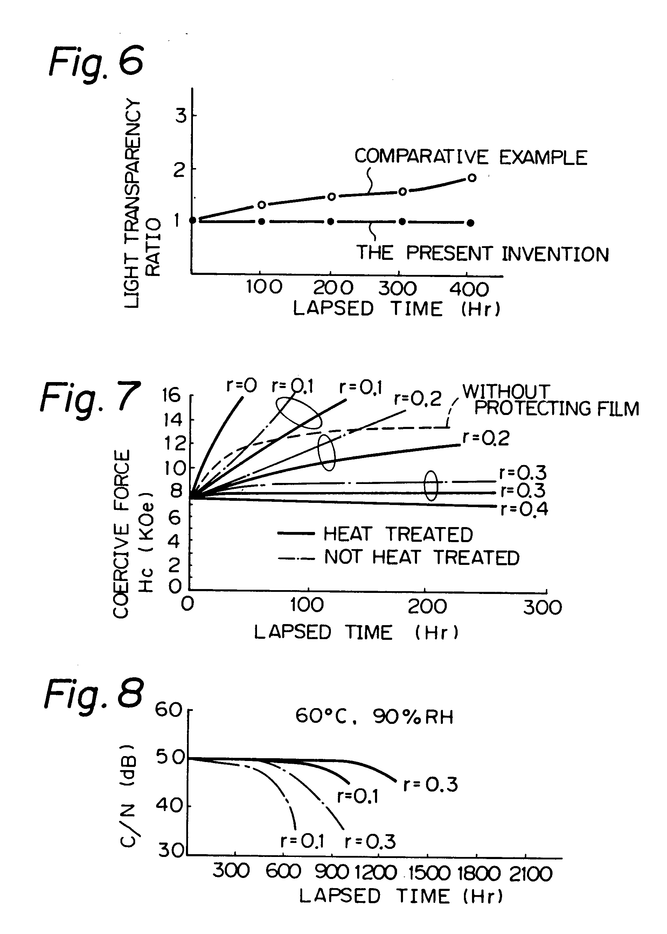

The results are shown in Fig. 6. From Fig. 6, it can be seen that the lower protecting film has an effect against a diffusion of oxygen and water from the substrate side into the Te film.

### Example 3

An acrylic resin substrate was set in a evaporation device and, by use of $SiO_2$, an oxide, and Tb, a rare earth metal, as the evaporation sources, and a vacuum of $3 \times 10^{-5}$ Pa, the respective evaporation sources were incident with an electron beam with the substrate being rotated to effect simultaneous deposition of $SiO_2$ and Tb onto the substrate. And, by varying the deposition rate ratio r (film thickness ratio) of Tb/$SiO_2$ between 0 and 0.4, protecting films with a thickness of 200 nm were formed. After these films were applied with heat treatment at 60°C in air for 80 hours, TbFeCo film was prepared as a rare earth-transition metal medium. The preparation conditions were vacuum degree of $1.3 \times 10^{-5}$ Pa and deposition rates of Tb: 0.23 nm/s, FeCo: 0.2 nm/s. The film prepared had a coercive force Hc = 560 - 640 kA/m (7 - 8 keO) and a Kerr rotational angle $\theta_K$ = 0.35°. Further, protecting film of Si was formed to a thickness of 200 nm-on the TbFeCo film without breaking vacuum.

The discs were left to stand at 60°C in air to monitor the changes in coercive force. The results are shown in Fig. 7. Also shown in Fig. 7 are the results for the disc having a TbFeCo film formed directly on the substrate without formation of a protecting film for comparative purpose. Referring to Fig. 7, in the disc not having an $SiO_2$-Tb protecting film (broken line), the coercive force Hc is increased, which may be considered to be due to oxidation by the active components from the PMMA substrate. Next, in the protecting film containing no Tb (in the drawing shown by r = 0), Hc is greatly changed as compared with the case of no protecting film, which may be considered to be due to oxidation of the recording film by $SiO_2$.

As the amount of Tb mixed becomes greater, the change in Hc becomes smaller. On the other hand, in Fig. 7, the chain line shows the case of no heat treatment after film formation and the solid line the case of heat treatment applied after film formation. From the changes between these cases, it can be recognized that the change in Hc is made smaller by heat treatment.

Next, Fig. 8 shows the change in recording and reading characteristics when these discs were used and left to stand at 60°C and 90% RH. From Fig. 8, it can be recognized that reduction in C/N can be made small by a heat treatment.

In Example 3, although heat treatment was conducted at a relatively low temperature of 60°C, an effect of stabilization of the protecting film could be recognized as described above. Ordinarily, the temperature necessary for stabilizing the oxide formed into a film by heat treatment is far higher than this temperature. This suggests that the film is stabilized according to a mechanism different from that of mere heat treatment of oxides, because the oxide and the rare earth metal are simultaneously deposited into a film according to the present invention.

Example 4

When a styrene resin, an epoxy resin and a polycarbonate resin are used as the substrate material, the same results as in Example 3 were obtained.

Example 5

By use of a disc having a resin film provided with a guide groove of a UV-ray curable resin on a glass disc, a $SiO_2$-Tb protecting film was prepared in the same manner as in Example 3. However, heat treatment was carried out at 120°C for 8 hours in this Example.

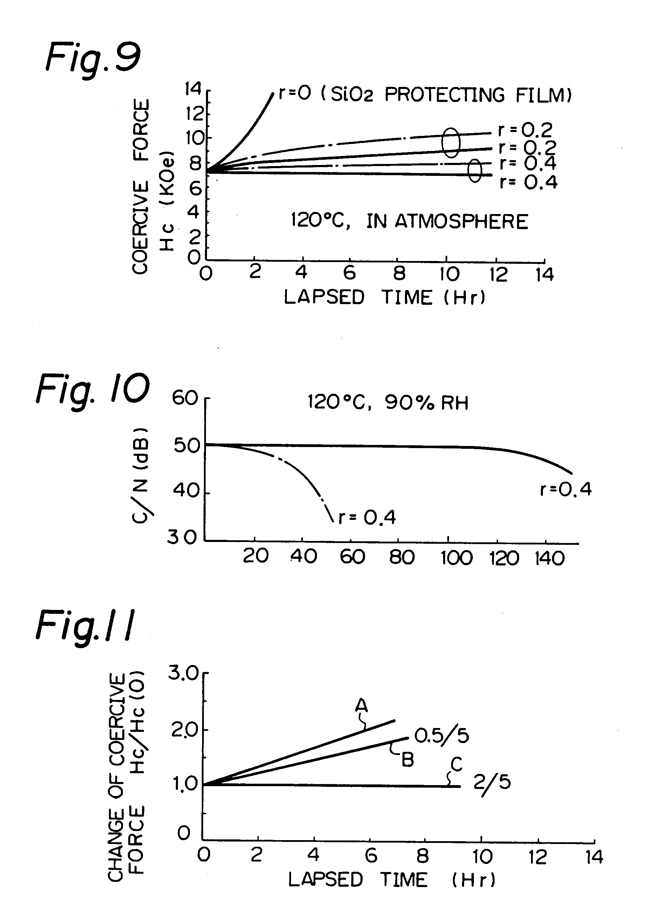

The disc obtained was left to stand in air at 120°C and the change in Hc was monitored. The results are shown in Fig. 9.

Next, the change in recording and reproducing characteristics were monitored when the disc was left to stand and an environment of 120°C and 90% RH. The results are shown in Fig. 10.

From Fig. 9 and Fig. 10, it can be recognized that the change of Hc and the reduction of C/N can be minimized by carrying out a heat treatment, whereby the life of the optical disc can be prolonged.

Example 6

When employing $Al_2O_3$, CaO, $La_2O_3$, MgO, $Sb_2O_3$ as the oxide and Tb as rare earth metal, the same results as shown in Examples 3-5 were obtained.

Example 7

When employing $SiO_2$ as the oxide, and any of La, Ce, Pr, Nd, Pm, Sm, Eu, Gd, Dy, Ho, Er, Tm, Yb, Lu as the rare earth metal, substantially the same results as in Examples 3 to 5 were obtained.

Example 8

On a glass substrate for a disc, by using ZnS as the sulfide and Tb as the rare earth metal, a ZnS-Tb protecting film (thickness 200 nm) was formed by evaporation by a vacuum evaporation device with an electron beam heating system. The film forming conditions may be, for example, vacuum degree: $5 \times 10^{-5}$ Pa, ZnS deposition rate: 0.5 nm/s and Tb deposition rate: 0.05 nm/s or 0.2 nm/s. A protecting film of only Tb or ZnS is similarly formed.

Next, on the protecting film, a magnetooptical recording medium film (thickness 100 nm) of TbFeCo is formed by evaporation without breaking the vacuum. The film forming conditions may be, for example, vacuum degree: $1.1 \times 10^{-5}$ Pa, Tb deposition rate: 0.23 nm/s, FeCo deposition rate: 0.20 nm/s, and the magnetic characteristics of the recording medium film obtained are an Hc of about 560 - 640 kA/m (7 - 8 kOe)(coercive force) and $\theta_K = 0.35°$ (Kerr rotational angle).

Further, without breaking the vacuum, on the TbFeCo film a ZnS-Tb deposited film is formed as an upper protecting film as described above.

When the change with lapse of time of the coercive force (Hc) of the thus prepared magnetooptical disc when maintained at 150°C in the air (humidity 90%) was examined, the results shown in Fig. 11 were obtained. In Fig. 11, line A shows the case of the ZnS protecting film not containing Tb: line B the case of a ZnS-Tb protecting film at Tb/ZnS deposition rate ratio of 0.05/0.5 (1 : 10); and line C the case of a ZnS-Tb protecting film at Tb/ZnS deposition rate ratio of 0.2/0.5 (2/5). As can be seen from Fig. 11, Hc is increased in lines A and B, but not substantially changed in line C. Increase of Kc may be considered to be due to the reaction of Tb in the TbFeCo film with the liberated sulfur, and therefore increase of Hc will be reduced because the liberated sulfur is fixed as the rare earth metal Tb in the protecting film is increased.

Example 9

By use of a substrate (glass 2P) having a UV-ray curable type resin film formed on a glass in place of the glass substrate in Example 8, a lower protecting film, a TbFeCo film and an upper protecting film are formed by evaporation similarly as in Example 1. The Kerr rotational angle $\theta_K$ of the thus prepared magnetooptical disc is 0.8° ($\lambda$ = 833 nm) to give 2.29-fold Kerr-effect enhancement, and the reflectance was 24%. Also, the refractive index of the ZnS-Tb protecting film (Tb/ZnS deposition rate ratio 0.2/0.5) was found to be 2.8.

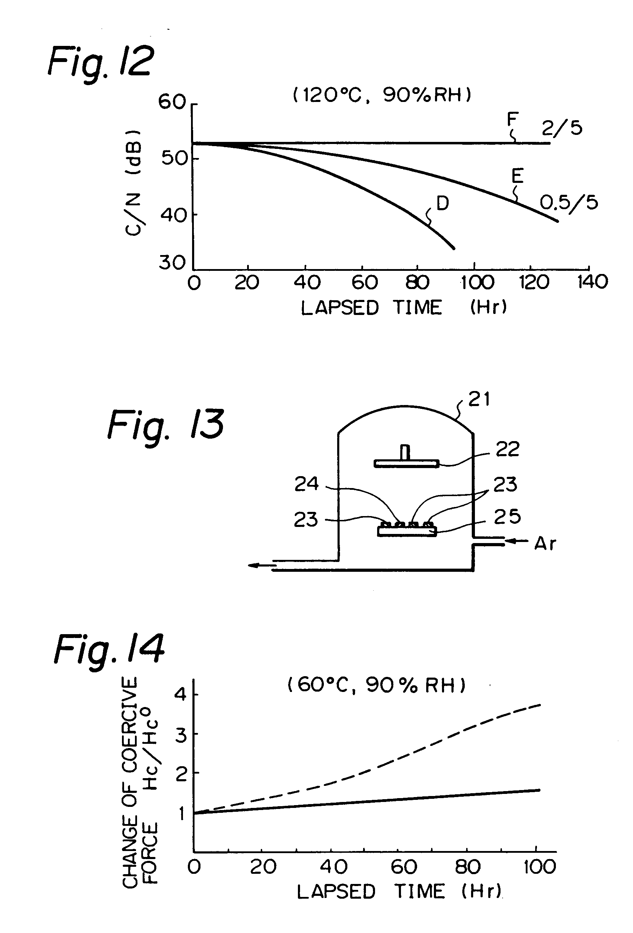

When the change with lapse of time of the recording and reading characteristic (CN ratio) of the prepared magnetooptical disc when maintained at 120°C in the air (humidity 90%) was examined, the results shown in Fig. 12 were obtained. In Fig. 12, line D shows the case of the ZnS protecting film not containing Tb: line E the case of the protecting film at a Tb/ZnS deposition rate ratio of 0.05/0.5; and line F the case of the protecting film at a Tb/ZnS deposition rate ratio of 0.2/0.5. As can be seen from Fig. 12, the reduction in CN ratio becomes smaller as the Tb content in the protecting film is increased, thus inhibiting deterioration.

Example 10

When other sulfides CdS, PbS or $Sb_2S_3$ were used in place of the sulfide ZnS constituting the protecting film in Example 8, the same results as in Example 8 were obtained.

Example 11

When using other rare earth metal La, Ce, Pr, Nd, Pm, Sm, Eu, Gd, Dy, Ho, Er, Tm, Yb or Lu in place of the rare earth metal Tb constituting the protecting film, in Example 8, the same results as in Example 8 were obtained.

Example 12

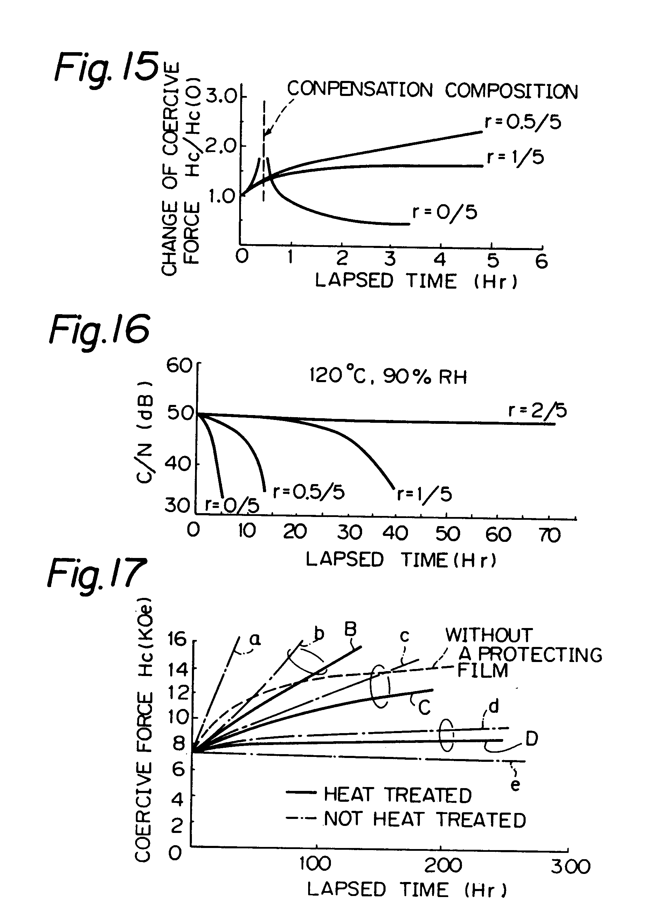

On an acrylic substrate having a guide groove (not shown) (e.g. PMMA substrate prepared by injection molding), a codeposited film of a sulfide (ZnS)-rare earth metal (Dy) is formed by sputtering. The film formation by sputtering is performed in the sputtering device as shown in Fig. 13 as follows. First, in a vacuum vessel 21, an acrylic substrate 22 as well as a sulfide (ZnS) target 23 and a rare earth metal (Dy) target 24 on a cathode 25, are arranged. These targets are juxtaposed so that the area ratio of ZnS target to Dy target may be 10 : 1. The vacuum vessel 21 is internally evacuated by use of a vacuum pump to $6.7 \times 10^{-5}$ Pa and Ar gas is permitted to flow into the vacuum vessel 21 to 1.3 Pa. A high frequency power (e.g. 200 W) from a high frequency (RF) power source is applied to the cathode 25, whereby $Ar^+$ ions attack the target to etch the target materials, and ZnS and Dy subjected to the etching (sputtering) are deposited to coat the acrylic substrate on the anode. Thus, a ZnS-Dy codeposited film (thickness 200 nm) is obtained.

Next, the substrate obtained is taken out from the sputtering device and placed in a heating furnace, where heat treatment is applied at 120°C for 1 hour without making the atmosphere specifically inert. On the substrate thus prepared according to the present invention, a magnetooptical recording medium film for a magnetooptical disc (e.g. TbFeCo film, thickness 100 nm) is formed by sputtering. Further, a protecting film (e.g. Si film, thickness 100 nm) is formed by sputtering on the magnetooptical recording medium film to give an magnetooptical disc.

The magnetooptical disc is examined for change in Hc (coercive force) by Kerr effect when maintained at 60°C and 90% humidity, whereby the results shown by the solid line in Fig. 14 were obtained. As a comparative example, a sulfide (ZnS) film containing no rare earth metal was formed by sputtering on an acrylic substrate, and further a TbFeCo magnetooptical recording medium film and a Si protecting film were formed similarly by sputtering to prepare a magnetooptical disc. Also, for the magnetooptical disc of the prior art example, Hc change was examined by Kerr effect when maintained at 60°C and 90% RH to obtain the results shown by the dotted line in Fig. 14. As apparently seen from Fig. 14, as compared with the film consisting only of sulfide of the prior art example, the Hc change with the lapse of time is smaller in the film of the sulfide-rare earth metal according to the present invention. This means that a considerable prolongation of life of a magnetooptical disc can be accomplished by the present invention as compared with the prior art.

Example 13

A UV-ray curable resin film was applied on a glass substrate and the resin film exposed and developed to form a guide groove, thus providing a resin substrate. On the substrate, a PbS-Sm codeposited film was formed by sputtering similarly as in the case of Example 12. After heat treatment of the resultant substrate at 100°C for 2 hours, a TbFeCo film and a Si protecting film were formed in the same way as in Example 12 to prepare a magnetooptical disc. The magnetooptical disc was examined for Hc change with the lapse of time, as in Example 12, and the same effect as in Example 12 was obtained.

Example 14

On a glass disc substrate, a TbFeCo film (coercive force Hc = 600 kA/m (7.5 kOe), Kerr rotational angle $\theta_K$ = 0.35 deg) was formed to a thickness of 100 nm. Next, the disc was set in an evaporation device, and by using a fluoride of $MgF_2$ and a rare earth metal Tb as the evaporation sources, the evaporation sources were heated by electron beam under a vacuum of 3 x $10^{-5}$ Pa, while rotating the substrate, to effect a simultaneous deposition of $MgF_2$ and Tb on the substrate. By varying the deposition rate ratio (film thickness growth ratio) of Tb/$MgF_2$, a protecting film ($MgF_2$-Tb) with a thickness of 200 nm was prepared. For comparative purposes, a sample of a protecting film consisting only of $MgF_2$ was also prepared.

The disc obtained was maintained at 150°C in air for the measurement of a change in the coercive force. The results are shown in Fig. 15. In Fig. 15, the axis of ordinate is the ratio of coercive force Hc during measurement relative to the initial coercive force $Hc^0$, and r is deposition rate ratio of Tb/$MgF_2$. As can be seen in the same figure, the difference in change of Hc occurred depending on the deposition rate ratio of Tb/$MgF_2$, with the change in Hc becoming smaller as r became greater as 0 → 0.5/5 → 1/5. The change in coercive force is due to the selective oxidation of Tb in the TbFeCo film with fluorine, and the composition at which the coercive force is diverged is called the compensation composition.

Example 15

After formation of a guide groove for tracking with a UV-ray curable resin on a glass disc substrate, a lower protecting film of Tb-$MgF_2$, a recording film of TbFeCo, and an upper protecting film of Tb-$MgF_2$ were successively formed to prepare an optical disc. The lower and upper protecting films of Tb-$MgF_2$ and the TbFeCo recording film were prepared in the same manner as in the preparation of the Tb-$MgF_2$ protecting film and the TbFeCo recording film of Example 14.

The changes with lapse of time of recording and reading characteristics of the optical disc obtained were monitored. The results are shown in Fig. 16. According to Fig. 16, at a deposition rate ratio r > 2/5, it can be recognized that the lowering of C/N ratio is markedly suppressed.

On the other hand, when the refractive index of the codeposited film of Tb-$MgFe_2$ was measured at r between 0/5 and 3/5, it was found to be monotonously increased as 1.38-1.68 with an increase in Tb, but substantially no absorption was observed from the visible region to IR region.

Example 16

By using X-$MgF_2$ (X: La, Ce, Nd, Sm, Dy, Ho, Lu) as the protecting film and TbFeCo (Hc = 560 - 640 kA/m (7 - 8 kOe), $\theta_K$ = 0.35°) as the recording film, experiments were carried out to obtain the same results as in Example 14 or 15.

Example 17

The same experiment as in Example 14 was conducted by use of Tb-Y (Y: $AlF_3$, $CaF_2$, CeF, $PbF_2$) as the protecting film,, and the same results as in Example 14 were obtained. In this case, although there is a more or less difference in refractive index depending on the respective fluorides, it is increased by about 0.4 with an increase in Tb within the range of the deposition rate ratio of r from 0/5 to 3/5.

The refractive index of fluorides is generally as small as 1.33-1.68, which is substantially equal to that of the substrate of a glass, plastic, etc., and it is possible to control the refractive index within this range by controlling content of Tb.

Example 18

On an acrylic substrate (e.g. a PMMA substrate prepared by injection molding) having a guide groove (not shown), by use of $MgF_2$ as the fluoride and Tb as the rare earth metal, a $MgF_2$-Tb protecting film (thickness 200 nm) was formed by coevaporation by means of a vacuum evaporation device with a electron beam heating system. Evaporating the protecting film was carried out under various conditions by varying the ratio of Tb deposition rate to $MgF_2$ deposition rate ($Tb/MgF_2$) as 0, 0.2, 0.3, 0.4 and 0.6.

Next, the substrate obtained was applied with a heat treatment (stabilizing treatment) by maintaining it in the air at 60°C for 80 hours. Another substrate was left as such without the application of the heat treatment. The heat treatment may be applied not in the air but in vacuum or in an inert atmosphere.

On the substrate subjected to heat treatment and the substrate without heat treatment a magnetooptical recording medium film of a magnetooptical disc (e.g. TbFeCo film, thickness 100 nm) was formed by evaporation. The film forming conditions may be, for example, vacuum degree: $1.1 \times 10^{-5}$ Pa, deposition rate: 0.23 nm/s for Tb and 0.2 nm/s for FeCo, and the characteristics of the recording medium film obtained were Hc (coercive force) = 560 - 640 kA/m (7 - 8 kOe) and $\theta_K$ (Kerr rotational angle) = 0.35° deg. Further, without breaking vacuum, an upper protecting film (thickness 200 nm) was formed on the magnetooptical recording medium film by evaporating Si. The upper protecting film was not required to be transparent, but may be a stable nitride ($Si_3N_4$, AIN) or a sulfide (ZnS).

When the change with lapse of time of the coercive force (Hc) when the thus prepared magnetooptical disc was maintained at 60°C in the air (humidity: 90%) was examined, the results shown in Fig. 17 were obtained. In Fig. 17, line a shows the case of the $MgF_2$ protecting film not containing Tb without heat treatment; lines B and b the cases of the protecting films at a $Tb/MgF_2$ deposition rate ratio of 0.2 with and without heat treatment; lines C and c the cases of the protecting films at a $Tb/MgF_2$ deposition rate ratio of 0.3 with and without heat treatment; lines D and d the cases of the protecting films at a deposition rate ratio of 0.4 with and without heat treatment; and line e the case of the protecting film at a deposition rate ratio of 0.6 without heat treatment. The broken line shows the case of magnetooptical disc having a TbFeCo film and an upper protecting film formed by evaporation on an acrylic substrate, without formation of an $MgF_2$-Tb lower protecting film.

As can be seen from Fig. 17, where there is no $MgF_2$-Tb protecting film (broken line), Hc is increased, which may be considered to be due to oxidation of the Tb in the TbFeCo film with active components from the acrylic substrate. In the protecting film containing no Tb (line a), Hc is more greatly changed than in the case of having no protecting film (broken line), which may be considered to be due to the reaction of the Tb in the TbFeCo film with the free fluorine in the $MgF_2$ film. As the Tb amount in the $MgF_2$-Tb protecting film becomes greater, the Hc change becomes smaller, and is further made smaller by application of the heat treatment.

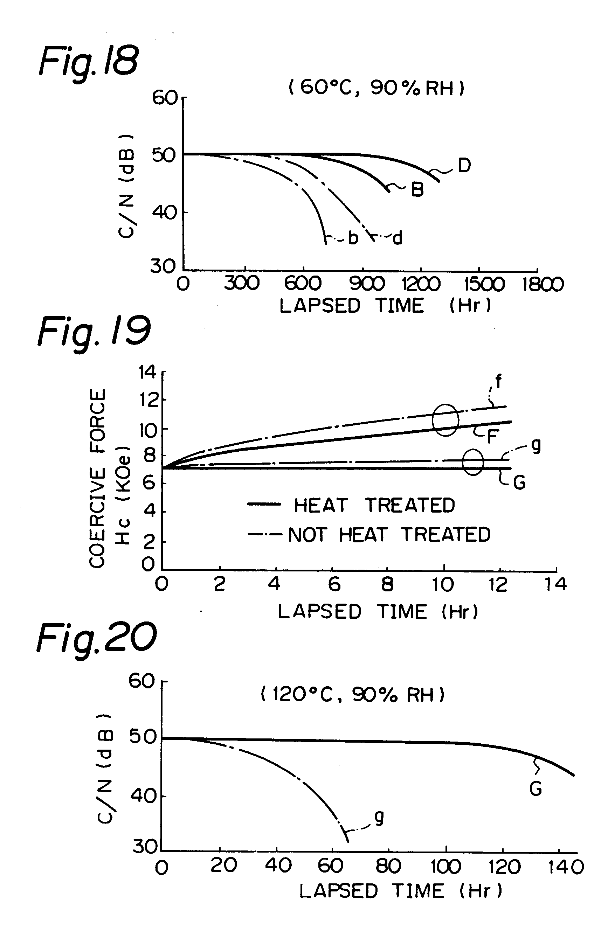

When the change with lapse of time of the recording and reading characteristics (CN ratio) when the prepared magnetooptical disc was maintained at 60°C in the air (humidity: 90%) was examined, the results shown in Fig. 18 were obtained. The lines B, b, D and d show the cases of the magnetooptical discs having Tb-$MgF_2$ protecting films as described above, and it can be understood that the reduction in CN ratio can be considerably improved by application of a heat treatment.

Example 19

When employing styrene, epoxy polycarbonate in place of the acrylic substrate in Example 18, the same results as in Example 18 were obtained.

Example 20

In place of the acrylic substrate in Example 18, a substrate having a resin film provided with a guide groove made of a UV-ray curable type resin formed on a glass substrate was employed. On this substrate, $MgF_2$-Tb protecting film (thickness 200 nm) was formed by the vacuum evaporation device in Example 18. The protecting films were formed by varying $Tb/MgF_2$ vapor deposition rate ratio at 0.3 and 0.6.

Next, the substrate obtained is applied with a heat treatment (stabilizing treatment) by maintaining it in the air at 120°C for 1 hour. Another substrate was left as such without application of the heat treatment.

On the substrate subjected to heat treatment and the substrate not subjected to heat treatment, a TbFeCo film was formed by the same evaporation as in Example 18, followed by formation of an Si upper protecting film thereon to prepare an optical disc.

When the change with lapse of time of the coercive force when the optical disc was maintained at 120°C in the air (humidity: 90%) was examined, the results shown in Fig. 19 were obtained. In Fig. 19, the lines F and f show the cases of the protecting films at a $Tb/MgF_2$ deposition rate ratio of 0.3 with and without heat treatment, and lines G and g the cases of the protecting films at a deposition rate ratio of 0.6 with and without heat treatment. It can be seen from Fig. 19 that the change in Hc is smaller as the Tb content in the protecting film is greater, and further, the Hc change is made smaller by application of the heat treatment.

Also, when the change with lapse of time of the recording and reading characteristic (CN ratio) in the optical disc having a protecting film at $Tb/MgF_2$ deposition rate ratio of 0.6 was examined, the results as shown in Fig. 20 were obtained. It can be seen that reduction in CN ratio can be made smaller by application of the heat treatment (line G).

Also, from these results, the substrate according to the present invention clearly contributes to a prolongation of the life of an optical magnetic disc.

Example 21

The same results as in Example 18 were also obtained when employing other fluoride $AlF_3$, $CaF_2$, CeF, $LaF_3$, LiF, $NaAlF_6$, $NdF_3$ or $ThF_4$ in place of the fluoride $MgF_2$ constituting the protecting film in Example 18.

Example 22

The same results as in Example 18 were also obtained when employing other rare earth metal La, Ce, Pr, Nd, Pm, Sm, Eu, Gd, Dy, Ho, Er, Tm, Yb or Lu in place of the rare earth metal Tb constituting the protecting film in Example 18.

Example 23

By use of a glass as a substrate, $Si_3N_4$ as a target and Tb as chips, a sample was prepared. More specifically, under a nitrogen pressure of $1 \times 10^{-1}$ Pa (background $4 \times 10^{-5}$ Pa), a sputtering power of 600 W and a deposition rate of 1 nm/min, a protecting film with a film thickness of 100 nm was formed on the substrate, then a recording film of TbFeCo thereon, and further an upper protecting film on the recording film under the same conditions as above. The above recording film has a film thickness of 100 nm, a coercive force Hc of 560 - 640 kA/m (7 - 8 kOe) and a Kerr rotational angle of 0.35°.

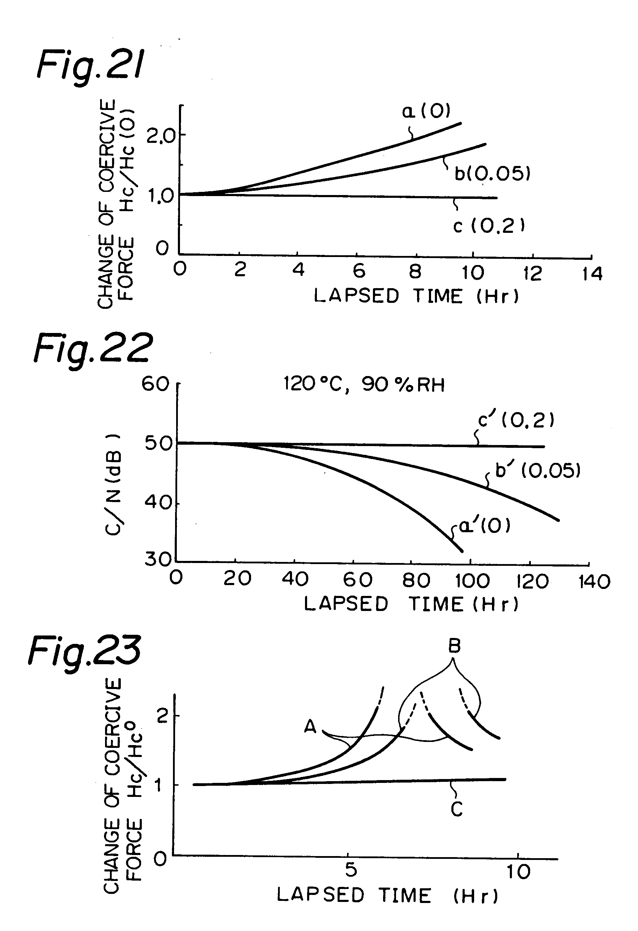

Heating test was conducted for the above sample in a high temperature air of 150°C and the change in coercive force Hc of the recording film with time lapsed was monitored. The experimental results are shown in Fig. 21. In the same figure, the curves a, b, c correspond to the area ratios of the chips to the target in preparation of the sample of 0, 0.05 and 0.2, respectively. As a result, as is apparent from the same figure, as the area of the chips (namely the amount of Tb which is a rare earth metal) is increased, the coercive force Hc becomes stabilized until substantially no increase of coercive force Hc can be seen when the area ratio becomes 0.2 (sample c). This is because the increase in coercive force is due to the apparent reduction in the content of Tb in the recording film as the result of selective reaction of Tb in the recording film with free nitrogen in the protecting films, and the above free nitrogen in the sample will no longer react with Tb in the recording film, since it is converted to a nitride as described above.

Example 24

A practical magnetooptical disc having the same constitution as the above sample in Example 23 was prepared and the change with time lapsed of recording and reading sensitivity (C/N ratio) of this sample was monitored when it was left to stand in an environment of l20°C and 90% RH. The constitution of this sample is substantially the same as the sample in Example 23, except that a guide groove for performing practical tracking is formed with the use of a UV-ray curable type resin, etc., on the substrate. The above experiment results are shown in Fig. 22. In the same figure, the curves a', b', c' correspond to the above area ratios of 0, 0.05, 0.2 respectively. As a result, as is apparent from the same figure, reduction in recording and reading sensitivity (C/N ratio) becomes smaller as the area ratio is increased, until substantially no reduction of the above sensitivity can be seen when the area ratio becomes 0.2 (sample c'). Thus, it can be appreciated that the protecting films exhibit stable protecting effect for a long period.

Example 25

13

Similar to the above examples 23 and 24, AlN, TiN, etc., are employed as the nitride and Tb is used as the rare earth metal for formation of the protecting film. Also in these cases the same results as above could be obtained.

Example 26

Si$_3$N$_4$ is used as the nitride and at least one of La, Ce, Pr, Nd, Pm, Sm, Eu, Gd, Dy, Ho, Er, Tm, Yb, Lu, etc., is used as the above rare earth metal, and the same results as above could be obtained.

Example 27

On a glass disc, a magnetooptical recording medium film of TbFeCo was formed by sputtering. On the recording medium film, a protecting film was formed by cosputtering Dy as a rare earth metal and TiC as a carbide with the area ratio between Dy chips and a TiC target, except that the area occupied by the Dy chips was 0, 1/20 and 1/10 (samples A, B and C, respectively). The conditions for sputtering were an Ar gas pressure of 2.6 Pa, an RF power of 400 W, a distance between the target and a substrate holder of 50 nm, and a deposited film thickness of 100 nm.

Thus obtained discs were maintained at 150°C for examining the change of the coercive force Hc of the recording medium film, as the effect of the protecting films.

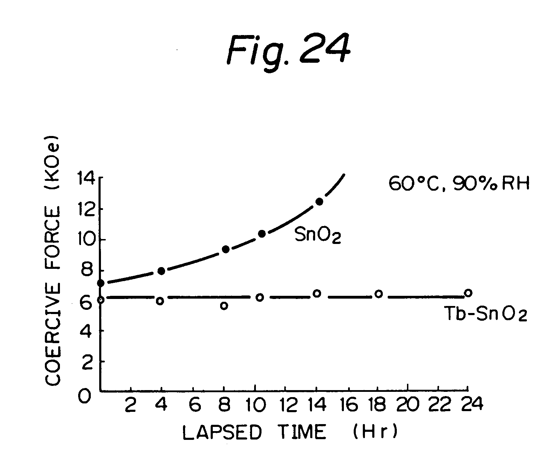

The results are shown in Fig. 23.

As can be clearly seen from Fig. 23, only the sample C with greater ratio of Dy exhibits no change in coercive force Hc even after lapse of about 10 hours, while other samples A and B exhibit great changes. Also, when the samples A and B are compared, it can be understood that the sample B using Dy, although small in amount, has acquired relatively stable coercive force as compared with the sample A using no Dy at all.

Example 28

Other rare earth metals of La, Ce, Pr, Nd, Pm, Sm, Eu, Gd, Tb, Ho, Er, Tm, Yb and Lu were used in codeposition to form a protecting film and similar results to those in Example 27 were obtained.

Example 29

Other carbides of SiC, Cr$_3$C$_2$, Mo$_2$C and WC were used in codeposition to form a protecting film and similar results to those in Example 27 were obtained.

Example 30

A polymethyl methacrylate (PMMA) substrate was set in a vacuum chamber which was evacuated to 1-2 × 10$^{-5}$ Pa For codepositing Tb and SnO$_2$, Tb and SnO$_2$ were heated to be evaporated or sublimated from respective evaporation sources by electron beams. The deposition rates of Tb and SnO$_2$ were 2.0 Å/s and 5.0 Å/s respectively. On the resultant Tb-SnO$_2$ lower protecting film of 70 nm, a magnetooptical recording medium film of TbFeCo of 80 nm and a Ti upper protecting film of 20 nm were formed, respectively.

For comparison purposes, a similar optical memory device was fabricated, but the lower protecting film was made by depositing SnO$_2$ alone, in place of the Tb-SnO$_2$ codeposited film.

These two samples were maintained at 60°C and 90% RH and the change of the coercive force of the magnetooptical recording medium film was observed. The results are shown in Fig. 24. From Fig. 24, in the case of the SnO$_2$ lower protecting film, the coercive force of the TbFeCo recording medium film was decreased, which indicates that oxidation of Tb in the TbFeCo recording medium film occurred. In contrast, in the case of the Tb-SnO$_2$ lower protecting film, a change of the coercive force was not observed and thus it was considered that the TbFeCo recording medium film was not changed.

When the Tb-SnO$_2$ lower protecting film was used, the Kerr rotation angle of the TbFeCo magnetooptical recording medium film was 0.8 degrees, which was improved in comparison with the 0.3 degrees obtained when the SiO$_2$ lower protecting film was used. This increase of the Kerr rotation angle was due to a larger refractive index of the SnO$_2$ or Tb-SnO$_2$.

Example 31

Other dielectric material having high refractive index of $ZrO_2$ was used in codeposition to form a protecting film and similar results to those in Example 30 was obtained.

When the Tb-$ZrO_2$ lower protecting film of 80 nm (Tb/$ZrO_2$ = 2/5) was used, the Kerr rotation angle of the TbFeCo magnetooptical recording medium film was 0.9 degrees.

## Claims

1. A magneto-optical memory device comprising a substrate (11), a first protecting film (12) on the substrate, a magneto-optical recording medium film (13) on the first protecting film, and a second protecting film (14) on the magneto-optical recording medium film, the magneto-optical recording medium film being made of rare earth and transition metals, wherein at least one of said first and second protecting films (12, 14) is in contact with the magneto-optical recording medium film (13) and contains a rare earth metal,

   characterized in that at least one of said first and second protecting films (12, 14) is a codeposited film of a rare earth metal and a dielectric impound of an oxide, a sulfide, a fluoride, a nitride or a carbide of a metal, said rare earth metal having a lower free energy of forming a compound than that of said metal of said dielectric compound, and in that the content of the rare earth metal in said codeposited film is more than 6 atom % of the total of said rare earth metal and said dielectric compound and is such that the optical transparency of the protecting film is not reduced by more than 10% of the optical transparency of a deposited film of only said dielectric compound.

2. A device according to claim 1, wherein said compound of the second metal is selected from the group consisting of $SiO_2$, $Al_2O_3$, CaO, $La_2O_3$, MgO, $Sb_2O_3$ and SiO.

3. A device according to claim 1, wherein said compound of the second metal is one of the group consisting of $SnO_2$ and $ZrO_2$.

4. A device according to claim 1, wherein said compound of the second metal is one of the group consisting of ZnS, CdS, PbS and $Sb_2S_2$.

5. A device according to claim 1, wherein said compound of the second metal is one of the group consisting of $AlF_3$, $CaF_2$, CeF, $LaF_3$, $MgF_2$, $NaAlF_6$, NaF, LiF, $NdF_3$, $PbF_2$ and $ThF_4$.

6. A device according to claim 1, wherein said compound of the second metal is one of the group consisting of AlN, $Si_3N_4$ and TiN.

7. A device according to claim 1, wherein said compound of the second metal is one of the group consisting of TiC, SiC, $Cr_3C_2$, $Mo_2C$ and WC.

8. A device according to claim 1, wherein said first metal is deposited in an amount of more than 10 atm% of the total amount of said first metal and said compound of the second metal.

9. A process for fabricating a magneto-optical memory device comprising a substrate (11), a first protecting film (12) on the substrate, an optical recording medium film (13) on the first protecting film, and a second protecting film (14) on the magneto-optical recording medium film, the magneto-optical recording medium film being made of rare earth and transition metals, wherein at least one of said first and second protecting films (12, 14) is in contact with the magneto-optical recording medium film (13) and contains a rare earth metal,

   characterized in that it comprises the step of forming at least one of said first and second protecting films (12, 14) by codepositing a rare earth metal and a dielectric compound of an oxide, a sulfide, a fluoride, a nitride or a carbide of a metal, said rare earth metal having a lower free energy of forming a compound than that of said metal of said dielectric compound, and in that the content of the rare earth metal in said codeposited film is more than 6 atom % of the total of said rare earth metal and said dielectric compound and is such that the optical transparency of the protecting film is not reduced by more than 10% of the optical transparency of a deposited film of only said dielectric compound.

10. A process according to claim 9, wherein said compound of the second metal is selected from the group consisting of $SiO_2$, $Al_2O_3$, CaO, $La_2O_3$, MgO, $Sb_2O_3$ and SiO.

15

**11.** A process according to claim 9, wherein said compound of the second metal is one of the group consisting of $SnO_2$ and $ZrO_2$.

**12.** A process according to claim 9, wherein said compound of the second metal is one of the group consisting of ZnS, CdS, PbS and $Sb_2S_2$.

**13.** A process according to claim 9, wherein said compound of the second metal is one of the group consisting of $AlF_3$ , $CaF_2$ , CeF, $LaF_3$ , $MgF_2$ , $NaAlF_6$ , NaF, LiF, $NdF_3$ , $PbF_2$ and $ThF_4$.

**14.** A process according to claim 9, wherein said compound of the second metal is one of the group consisting of AlN, $Si_3N_4$ and TiN.

**15.** A process according to claim 9, wherein said compound of the second metal is one of the group consisting of TiC, SiC, $Cr_3C_2$, $Mo_2C$ and WC.

**16.** A process according to claim 9, wherein said first metal is deposited in an amount of more than 10 atm% of said first metal and said compound of the second metal.

## Revendications

**1.** Un dispositif à mémoire magnéto-optique comprenant un substrat (11), un premier film protecteur (12) sur le substrat, un film de milieu d'enregistrement magnéto-optique (13) sur le premier film protecteur, et un second film protecteur (14) sur le film de milieu d'enregistrement magnéto-optique, le film de milieu d'enregistrement magnéto-optique étant réalisé en métaux des terres rares et en métaux de transition, tandis que l'un au moins de ces premier et second films protecteurs (12, 14) est en contact avec le film de milieu d'enregistrement magnéto-optique (13) et contient un métal des terres rares, caractérisé en ce que l'un au moins de ces premier et second films protecteurs (12, 14) est un film co-déposé d'un métal des terres rares et d'un composé diélectrique d'un oxyde, d'un sulfure, d'un fluorure, d'un nitrure ou d'un carbure d'un métal, ledit métal des terres rares ayant une énergie libre de formation d'un composé inférieure à celle dudit métal du composé diélectrique, et en ce que la teneur en métal des terres rares dans ledit film co-déposé est supérieure à 6 % atomique du total dudit métal des terres rares et dudit composé diélectrique et est telle que la transparence optique du film protecteur ne soit pas réduite de plus de 10 % de la transparence optique d'un film déposé constitué par ledit composé diélectrique seul.

**2.** Un dispositif selon la revendication 1, selon lequel ledit composé du second métal est choisi dans le groupe comprenant les suivants : $SiO_2$, $Al_2O_3$, CaO, $La_2O_3$, MgO, $Sb_2O_3$ et SiO.

**3.** Un dispositif selon la revendication 1, selon lequel ledit composé du second métal est un composé du groupe comprenant le $SnO_2$ et le $ZrO_2$.

**4.** Un dispositif selon la revendication 1, selon lequel ledit composé du second métal est l'un des composés du groupe comprenant les suivants : ZnS, Cds, PbS et $Sb_2S_2$.

**5.** Un dispositif selon la revendication 1, selon lequel ledit composé du second métal est un composé du groupe comprenant les suivants : $AlF_3$, $CaF_2$, CeF, $LaF_3$, $MgF_2$, $NaAlF_6$, NaF, LiF, $NdF_3$, $PbF_2$ et $ThF_4$.

**6.** Un dispositif selon la revendication 1, selon lequel ledit composé du second métal est un composé du groupe comprenant les suivants : AlN, $Si_3N_4$ et TiN.

**7.** Un dispositif selon la revendication 1, selon lequel ledit composé du second métal est un composé du groupe comprenant les suivants : TiC, SiC, $Cr_3C_2$, $Mo_2C$ et WC.

**8.** Un dispositif selon la revendication 1, selon lequel ledit premier métal est déposé en quantité supérieure à 10 % atomique par rapport à la quantité totale dudit premier métal et dudit composé du second métal.

**9.** Un procédé de fabrication d'un dispositif a mémoire magnéto-optique comprenant un substrat (11), un premier film protecteur (12) sur le substrat, un film de milieu d'enregistrement optique (13) sur le premier film protecteur et un second film protecteur (14) sur le film de milieu d'enregistrement magnéto-optique, le film de milieu d'enregistrement magnéto-optique étant réalisé en métaux des terres rares et en métaux de transition, tandis que l'un au moins desdits premier et second films protecteurs (12, 14) est en contact avec le film de milieu d'enregistrement magnéto-optique (13) et contient un métal des terres rares, caractérisé en ce qu'il comprend l'étape de formation de l'un au moins desdits premier et second films protecteurs (12, 14) par co-dépôt d'un métal des terres rares et d'un composé diélectrique d'un oxyde, d'un sulfure, d'un fluorure, d'un nitrure ou d'un carbure d'un métal, ledit métal des terres rares ayant une énergie libre de formation d'un composé inférieure à celle dudit métal dudit composé diélectrique, et en ce que la teneur en métal des terres rares dans ledit film co-déposé est supérieure à 6 % atomique par rapport au total dudit métal des terres rares et dudit composé diélectrique et est telle que la transparence optique du film protecteur n'est pas réduite de plus de 10 % de la transparence optique d'un film déposé constitué seulement dudit composé diélectrique.

10. Un procédé selon la revendication 9, selon lequel ledit composé du second métal est choisi dans le groupe comprenant les suivants : $SiO_2$, $Al_2O_3$, CaO, $La_2O_3$, MgO, $Sb_2O_3$ et SiO.

11. Un procédé selon la revendication 9, selon lequel ledit composé du second métal est un composé du groupe constitué de $SnO_2$ et de $ZrO_2$.

12. Un procédé selon la revendication 9, selon lequel ledit composé du second métal est un composé du groupe comprenant le ZnS, le Cds, le PbS et le $Sb_2S_2$.

13. Un procédé selon la revendication 9, selon lequel ledit composé du second métal est un composé du groupe comprenant les suivants : $AlF_3$, $CaF_2$, Cef, $LaF_3$, $MgF_2$, $NaAlF_6$, NaF, LiF, $NdF_3$, $PbF_2$ et $ThF_4$.

14. Un procédé selon la revendication 9, selon lequel ledit composé du second métal est un composé du groupe comprenant le AlN, le $Si_3N_4$ et le TiN.

15. Un procédé selon la revendication 9, selon lequel ledit composé du second métal est un composé du groupe comprenant les suivants : TiC, SiC, $Cr_3C_2$, $Mo_2C$ et WC.

16. Un procédé selon la revendication 9, selon lequel ledit premier métal est déposé en quantité supérieure à 10 % atomique par rapport audit premier métal et audit composé du second métal.

**Patentansprüche**

1. Eine magneto-optische Speicheranordnung mit einem Substrat (11), einem ersten Schutzfilm (12) auf dem Substrat, einem magneto-optischen Aufzeichnungsmedium-Film (13) auf dem ersten Schutzfilm und einem zweiten Schutzfilm (14) auf dem magneto-optischen Aufzeichnungsmedium-Film, wobei der magneto-optische Aufzeichnungsmedium-Film aus Seltenerd- und Übergangsmetallen besteht, und wobei mindestens einer der genannten ersten und zweiten Schutzfilme (12, 14) in Verbindung mit dem magneto-optischen Aufzeichnungsmedium-Film (13) ist und ein Seltenerdmetall enthält, dadurch gekennzeichnet, daß mindestens einer der genannten ersten und zweiten Schutzfilme (12, 14) ein gemeinsam abgeschiedener Film eines Seltenerdmetalls und einer dielektrischen Verbindung von einem Oxid, einem Sulfid, einem Fluorid, einem Nitrid oder einem Karbid eines Metalls ist, wobei die freie Energie der Verbindungsherstellung des genannten Seltenerdmetalls geringer ist als jene des genannten Metalls der genannten dielektrischen Verbindung, und daß der Gehalt des Seltenerdmetalls in dem genannten gemeinsam abgeschiedenen Film höher als 6 Atom-% der Gesamtmenge des genannten Seltenerdmetalls und der genannten dielektrischen Verbindung ist, und so ist, daß die optische Durchlässigkeit des Schutzfilms um nicht mehr als 10 % der optischen Durchlässigkeit eines nur von der genannten dielektrischen Verbindung abgeschiedenen Films reduziert wird.

2. Eine Anordnung nach Anspruch 1, bei welcher die genannte Verbindung des zweiten Metalls ausgewählt ist aus der Gruppe bestehend aus $SiO_2$, $Al_2O_3$, CaO, $La_2O_3$, MgO, $Sb_2O_3$ und SiO.

3. Eine Anordnung nach Anspruch 1, bei welcher die genannte Verbindung des zweiten Metalls eine der

EP 0 231 672 B1

Gruppe bestehend aus $SnO_2$ und $ZrO_2$ ist.

**4.** Eine Anordnung nach Anspruch 1, bei welcher die genannte Verbindung des zweiten Metalls eine der Gruppe bestehend aus ZnS, CdS, PbS und $Sb_2S_2$ ist.

**5.** Eine Anordnung nach Anspruch 1, bei welcher die genannte Verbindung des zweiten Metalls eine der Gruppe bestehend aus $AlF_3$, $CaF_2$, CeF, $LaF_3$, $MgF_2$, $NaAlF_6$, NaF, LiF, $NdF_3$, $PbF_2$ und $ThF_4$ ist.

**6.** Eine Anordnung nach Anspruch 1, bei welcher die genannte Verbindung des zweiten Metalls eine der Gruppe bestehend aus AlN, $Si_3N_4$ und TiN ist.

**7.** Eine Anordnung nach Anspruch 1, bei welcher die genannte Verbindung des zweiten Metalls eine der Gruppe bestehend aus TiC, SiC, $Cr_3C_2$, $Mo_2C$ und WC ist.

**8.** Eine Anordnung nach Anspruch 1, bei welcher das genannte erste Metall in einer Menge von mehr als 10 Atom-% von der Gesamtmenge des genannten ersten Metalls und der genannten Verbindung des zweiten Metalls abgeschieden wird.

**9.** Ein Verfahren zur Herstellung einer magneto-optischen Speicheranordnung mit einem Substrat (11), einem ersten Schutzfilm (12) auf dem Substrat, einem optischen Aufzeichnungsmedium-Film (13) auf dem ersten Schutzfilm, und einem zweiten Schutzfilm (14) auf dem magneto-optischen Aufzeichnungsmedium-Film, wobei der magneto-optische Aufzeichnungsmedium-Film aus Seltenerd- und Übergangsmetallen besteht, und wobei mindestens einer der ersten und zweiten Schutzfilme (12, 14) mit dem magneto-optischen Aufzeichnungsmedium-Film (13) in Verbindung ist und ein Seltenerdmetall enthält, dadurch gekennzeichnet, daß es den Schritt umfaßt zur Bildung von mindestens einem der genannten ersten und zweiten Schutzfilme (12, 14) durch gemeinsames Abscheiden eines Seltenerdmetalls und einer dielektrischen Verbindung von einem Oxid, einem Sulfid, einem Fluorid, einem Nitrid oder einem Karbid eines Metalls, wobei die freie Energie der Verbindungsherstellung des genannten Seltenerdmetalls geringer ist als jene des genannten Metalls der genannten dielektrischen Verbindung, und daß der Gehalt des Seltenerdmetalls in dem genannten gemeinsam abgeschiedenen Film höher als 6 Atoms-% der Gesamtmenge des genannten Seltenerdmetalls und der genannten dielektrischen Verbindung ist, und so ist, daß die optische Durchlässigkeit des Schutzfilms um nicht mehr als 10 % der optischen Durchlässigkeit eines nur von der genannten dielektrischen Verbindung abgeschiedenen Films reduziert wird.

**10.** Ein Verfahren nach Anspruch 9, bei welchem die genannte Verbindung des zweiten Metalls ausgewählt ist aus der Gruppe bestehend aus $SiO_2$, $Al_2O_3$, CaO, $La_2O_3$, MgO, $Sb_2O_3$ und SiO.

**11.** Ein Verfahren nach Anspruch 9, bei welchem die genannte Verbindung des zweiten Metalls eine der Gruppe bestehend aus $SnO_2$ und $ZrO_2$ ist.

**12.** Ein Verfahren nach Anspruch 9, bei welchem die genannte Verbindung des zweiten Metalls eine der Gruppe bestehend aus ZnS, CdS, PbS und $Sb_2S_2$ ist.

**13.** Ein Verfahren nach Anspruch 9, bei welchem die genannte Verbindung des zweiten Metalls eine der Gruppe bestehend aus $AlF_3$, $CaF_2$, CeF, $LaF_3$, $MgF_2$, $MaAlF_6$, NaF, LiF, $NdF_3$, $PbF_2$ und $ThF_4$ ist.

**14.** Ein Verfahren nach Anspruch 9, bei welchem die genannte Verbindung des zweiten Metalls eine der Gruppe bestehend aus AlN, $Si_3N_4$ und TiN ist.

**15.** Ein Verfahren nach Anspruch 9, bei welchem die genannte Verbindung des zweiten Metalls eine der Gruppe bestehend aus TiC, SiC, $Cr_3C_2$, $Mo_2C$ und WC ist.

**16.** Ein Verfahren nach Anspruch 9, bei welchem das genannte erste Metall in einer Menge von mehr als 10 Atom-% des genannten ersten Metalls und der genannten Verbindung des zweiten Metalls abgeschieden wird.

18

EP 0 231 672 B1

*Fig. 1*

*Fig. 2*

*Fig. 3*

19

# Fig. 4

# Fig. 5

*Fig. 6*

*Fig. 7*

*Fig. 8*

*Fig.9*

COERCIVE FORCE Hc (KOe)

r=0 (SiO2 PROTECTING FILM)

r = 0.2
r = 0.2
r = 0.4
r= 0.4

120°C, IN ATMOSPHERE

LAPSED TIME (Hr)

*Fig. 10*

C/N (dB)

120°C, 90% RH

r=0.4

r= 0.4

*Fig.11*

CHANGE OF COERCIVE FORCE Hc/Hc (O)

A

0.5/5

B

C

2/5

LAPSED TIME (Hr)

## Fig. 12

(120°C, 90%RH)

C/N (dB) vs LAPSED TIME (Hr)

F 2/5
E 0.5/5
D

## Fig. 13

21
22
24
23
23
25
Ar

## Fig. 14

(60°C, 90 % RH)

CHANGE OF COERCIVE FORCE $Hc/Hc^0$ vs LAPSED TIME (Hr)

*Fig. 15*

*Fig. 16*

*Fig. 17*

**Fig. 18**

( 60°C, 90% RH )

C/N (dB) vs LAPSED TIME (Hr)

**Fig. 19**

COERCIVE FORCE Hc (KOe) vs LAPSED TIME (Hr)

— HEAT TREATED
—·— NOT HEAT TREATED

**Fig. 20**

( 120°C, 90% RH )

C/N (dB) vs LAPSED TIME (Hr)

Fig.21

Fig.22

Fig.23

Fig. 24